**Europäisches Patentamt**

(19) **European Patent Office**

**Office européen des brevets**

(11) Veröffentlichungsnummer: **0 072 444**
**B1**

(12) **EUROPÄISCHE PATENTSCHRIFT**

(45) Veröffentlichungstag der Patentschrift:
**06.04.87**

(21) Anmeldenummer: **82106447.4**

(22) Anmeldetag: **17.07.82**

(51) Int. Cl.⁴: **C 08 J 9/06,** C 08 J 9/36 //
(C08J9/06, C08L23:16, 23:02,
23:26)

(54) **Formmasse für einen vernetzten Schaumstoff aus Polyolefinen und Äthylen-Propylen-Kautschuk und Verfahren zum Herstellen des Schaumstoffes.**

(30) Priorität: **17.08.81 DE 3132439**

(43) Veröffentlichungstag der Anmeldung:
**23.02.83 Patentblatt 83/8**

(45) Bekanntmachung des Hinweises auf die Patenterteilung:
**06.04.87 Patentblatt 87/15**

(84) Benannte Vertragsstaaten:
**AT BE CH DE FR GB IT LI LU NL SE**

(56) Entgegenhaltungen:
**DE-A-1 920 931**
**US-A-4 247 652**

(73) Patentinhaber: **DYNAMIT NOBEL
AKTIENGESELLSCHAFT, Postfach 1209, D-5210
Troisdorf, Bez. Köln (DE)**

(72) Erfinder: **Kühnel, Werner, D-5206 Neunkirchen-
Schöneshof (DE)**
Erfinder: **Spielau, Paul, Dr., Van- Gogh- Platz 10,
D-5210 Troisdorf- Eschmar (DE)**

**0 072 444**

**Beschreibung**

Die Erfindung bezieht sich auf eine verschäumbare Formmasse zum Herstellen eines vernetzten Schaumstoffes auf Basis eines Gemisches eines Polyolefins und eines Äthylen-Propylen-Kautschuks, eines Schäummittels und ggf. eines Vernetzungsmittels, durch druckloses Vernetzen und Verschäumen ein Verfahren zum Herstellen von vernetzten Schaumstoffen mit sehr feiner gleichförmiger überwiegend geschlossener Zellstruktur auf Basis eines Gemisches eines Polyolefins und eines Äthylen-Propylen-Kautschuks.

Es ist bekannt, Polyolefine mit Peroxyden und/oder energie reichen Strahlen zu vernetzen und gleichzeitig oder anschließend mit chemischen Schäummitteln wie z.B. Azodicarbonamid, Sulfonylhydrazin, Sulfonylsemicarbaziden und dgl. aufzuschäumen (siehe beispielsweise DE-AS 16 94 130).

Hierbei können bis zu 100 Gew.-Teile mindestens eines mit dem Polyolefin mischbaren Kautschuks und/oder Kunststoffs auf je 100 Teile Polyolefin eingearbeitet werden, wobei unter mit Polyolefin mischbare Kautschuke z.B. Naturkautschuk, Äthylen-Propylen-Kautschuk, Butylkautschuk, Polyisobutylen, Styrolbutadienkautschuk, Polybutadien, und Polyisopren verstanden werden.

Strahlenvernetzte Polyolefinschaumstoffe werden beispielsweise in der DE-OS 15 69 465 beschrieben, wobei diese Polyolefinschaumstoffe durch Zusatz von 5 bis 500 Gew.-Teilen Kautschuk wie Naturkautschuk, Äthylen-Propylen-Kautschuk, Styrol-Butadien-Kautschuk, Nitril-Butadien-Kautschuk, Polycis-Butadien-Kautschuk, Neopren-Kautschuk bezogen auf 100 Gew.-Teile Polyäthylen modifiziert werden können. Die Modifizierung vernetzter Polyolefinschaumstoffe durch Zusatz von Kautschuk oder anderen Kunststoffen dient dem Zweck, insbesondere die physikalischen Eigenschaften der zugesetzten Kautschuke, bzw. Kunststoffe, wie Temperaturbeständigkeit, bessere mechanische Widerstandsfähigkeit, höhere Elastizität und Zugfestigkeit auf den Schaumstoff zu übertragen. Der Zusatz von Kautschuken verleiht hierbei den Polyolefinschaumstoffen eine höhere Elastizität. Beispielsweise ist es auch bekannt (siehe DE-AS 28 39 733 und DE-OS 30 32 635) temperaturbeständigere vernetzte Polyolefinschaumstoffe auf Basis von Polypropylen herzustellen. Weiterhin ist es bekannt, vernetzte Polyolefinschaumstoffe zum Herstellen von sehr leichtgewichtigen Schaumstoffen durch Zusatz von Polybutadien zu modifizieren (siehe DE-AS 19 30 134 und DE-OS 29 11 719).

Aus der DE-A- 19 20 931 sind verschäumbare Polymerisatmassen der erfindungsgemäßen Gattung bekannt, bei denen Äthylen-Propylen-Kautschuk an Stelle von großen Mengen Ruß, anorganischen Füllstoffen und Weichmacherölen im Verhältnis von 5 bis 95 Gew.-Teilen Kautschuk, 95 bis 5 Gew.-Teile Polyolefine zugegeben werden, wobei die herstellbaren Schaumqualitäten teils weich, teils härter, teils feinzellig sein können, wobei die Feinzelligkeit bei Verschäumen unter Anwendung von äußerem Druck erzielt wird.

Ein weiteres Bemühen besteht darin, sehr feinzellige Polyolefinschaumstoffe herzustellen.

Hierzu wird gemäß DE-AS 23 51 515 bei einem Verfahren zum Herstellen feinzelliger Schaumstoffe aus Polyolefinen durch peroxydische Vernetzung und Verschäumen durch ein Treibmittel vorgeschlagen, dem Polyolefin außer dem Peroxyd und dem Treibmittel als Hilfsmittel ein weiteres Treibmittel mit einem niedrigeren Temperaturzersetzungsbereich als das erste Treibmittel zuzusetzen, um auf diese Weise eine Zellverkleinerung und damit feinzelligeren Schaumstoff zu erzielen.

Nach der DE-OS 23 48 468 wird ein Verfahren zum Herstellen vernetzter Polyolefinschaumstoffe mit sehr feiner und gleichförmiger geschlossener Zellstruktur vorgeschlagen, bei dem die Feinzelligkeit mit Hilfe eines Verschäumungsmittels mit einem mittleren Teilchendurchmesser von 10 bis 30 μm erreicht werden soll, wobei als Verschäumungsmittel z.B. Azodicarbonamid in Frage kommt.

Zellgröße, Gleichförmigkeit der geschlossenen Zellen, Zellwandaufbau beeinflussen die Eigenschaften eines Schaumstoffes ganz wesentlich, je feiner und gleichförmiger die Zellgröße ist, desto besser sind die Wärmeisolierungs- und Dämpfungseigenschaften sowie das Aussehen - glatte feine Oberfläche - des Schaumstoffes.

Während nach dem Verfahren gemäß dem Stand der Technik jeweils zusätzliche Mittel eingesetzt wurden, um die feinere Zellstruktur eines vernetzten Polyolefinschaumstoffes zu erzeugen, wurde gem. der Erfindung überraschender Weise gefunden, daß auch eine Mischung von Polyolfinen mit ausgewählten Kautschuken einen sehr feinzelligen elastischen Schaumstoff glechmäßiger Zellstruktur ergibt. Die Erfindung löst die gestellte Aufgabe durch eine verschäumbare Formmasse, die auf 100 Gew.-Teile Polyolefin 25 bis 150 Gew.-Teile eines teilkristallinen Äthylen-Propylen-Terpolymers einer Reißfestigkeit größer 5,0 N/mm², einer Mooney-Viakosität (ML 1+4/100) größer 50 mit einer Schmelzwärme $\triangle H_s$ größer 10 J/g und mit

60 bis 80 Gew.-% Äthylen,

2 bis 10 Gew.-% Terkomponente aus Äthylennorbornen oder 1,4 Hexadien,

10 bis 38 Gew -% Propylen

enthält.

Das Wesen der Erfindung wird darin gesehen, daß durch den Zusatz ausgewählter teilkristalliner Äthylen-Propylen-Terpolymere mit bestimmten Eigenschaften vernetzte Schaummstoffe auf Basis von Polyolefinen herstellbar sind, die nicht nur die aufgrund des zugesetzten Äthylen-Propylen-Terpolymer-Kautschuk verbesserten physikalische Eigenschaften aufweisen, sondern zugleich in überraschender Weise zu einer Zellverkleinerung d.h. Feinzelligkeit führen. Wie noch in den Beispielen gezeigt wird, sind nur die erfindungsgemäß ausgewählten speziellen teilkristallinen Äthylen-Propylen-Terpolymere geeignet, die erfindungsgemäß gestellte Aufgabe zu lösen, d.h. glatte Oberfläche, feinere Zellen gegenüber den bekannten Polyolefinschaumstoffen zu erzeugen. Die ausgewählten Äthylen-Propylen-Terpolymere beeinflussen sowohl

2

die Verarbeitbarkeit als auch die Qualität des hergestellten Schaumstoffes günstig. Wesentlich für die Auswahl der Äthylen-Propylen-Terpolymere ist ihre Teilkristallinität, worüber die nach der DSC-Methode im Differentialabtastcalorimeter gemessenen Schmelzkurven Auskunft geben. Das Maximum des Schmelzpeaks, gemessen als Temperatur TS in °C nach der DSC-Kurve wird als endothermer Peak bezeichnet, der sehr eng sein oder aber auch einen Bereich umfassen kann. Bei Äthylen-Propylen-Terpolymeren liegt die Temperatur TS im Bereich um 50°C. Die zum Schmelzen benötigte Wärmemenge, die sogenannte Schmelzwärme $\Delta H_s$ gemessen ebenfalls nach DSC-Methode, gibt Aufschluß über das Vorhandensein kristalliner Bläcke im Äthylen-Propylen-Terpolymer. Solche teilkristallinen Äthylen-Propylen-Terpolymere mit einer Schmelzwärme von mindestens 10 J/g werden erfindungsgemäß eingesetzt.

Die mit der erfindungsgemäßen verschäumbaren Formmasse hergestellten vernetzten Schaumstoffkörper, die entweder chemisch mittels eines Vernetzungsmittels vernetzt sind oder mittels energiereicher Strahlen vernetzt werden, weisen im Durchschnitt die 2 bis 5-fache Zellanzahl auf gegenüber Polyolefinschaumstoffen auf der gleichen Basis ohne die erfindungsgemäß zugesetzten Äthylen-Propylen-Ter-Komponenten. Die Porengröße bzw. Zellgröße des Schsumstoffes ist jeweils relativ zu betrachten, sie ist immer auch abhängig von der Raumdichte des Schaumstoffes und der Dicke der hergestellten Schaumstoffbahn oder Teile. Je höher die Raumdichte eines Schaumstoffes, desto kleiner sind die Zellen und je dicker eine Schaumstoffbahn, desto größer sind die Zellen, bei sonst jeweils gleichen Bedingungen.

Bei den erfindungsgemäß vernetzten Schaumstoffen kann jede herkömmliche Art der Vernetzung angewendet werden. Eine Möglichkeit ist die Anwendung von energiereichen Strahlen, in diesem Fall wird eine verschäumbare Formmasse einer ionisierenden Strahlung ausgesetzt. Die andere Weise sieht die Verwendung eines Vernetzungsmittels vor. Beispiele für geeignete Vernetzungsmittel für die Erfindung sind Peroxyde, insbesondere Dicumylperoxyd, aber auch 2,5-Dimethyl-2,5-(Tertiär-Butyl)-Peroxyhexan, 1,10-Decan-Bis-Sulfonacide, p-Chinondioxin u.a. Bevorzugt werden diese Vernetzungsmittel in Mengen von 0,6 bis 1,6 Gew.-Teile bezogen auf die Summe von 100 Gew.-Teile Polyolefin und 25 bis 150 Gew.-Teile eines gemäß der Erfindung ausgewählten teilkristallinen Äthylen-Propylen-Terpolymers in der verschäumbaren Formmasse vorgesehen.

Als Schäummittel wird bei dem Verfahren und der Formmasse gemäß der Erfindung ein Schäummittel bevorzugt, dessen Zersetzungstemperatur gleich oder höher ist als diejenige des Vernetzungsmittels. Bevorzugt ist insbesondere Azodicarbonamid und seine Derivate, jedoch kommen auch Schäummittel wie Dinitroso-pentamethylentetramin, p,p-Oxy-bis-benzol-sulfonylhydrazid, Toluolsulfonylhydrazid in Frage. Die anzuwendende Menge an Schäummlttel richtet sich nach der angestrebten Rohdichte des herzustellenden Schaumstoffes und liegt im allgemeinen zwischen 0,5 bis 25 Gew.-% bezogen auf die gesamte verschäumbare Formmasse. Damit können Schaumstoffe mit Raumdichten von 25 bis 300 kg/m$^3$ und mehr hergestellt werden.

Als Polyolefine werden für die Erfindung bevorzugt Polyäthylen mit einem Schmelzindex (MFI 190/2) von 1 bis 8 und einer Dichte von 0,91 bis 0,96 g/cm$^3$, vorzugsweise Hochdruck-Polyäthylen vorgesehen. Für die Erfindung können auch Gemische von Polyolefinen z.B. Polyäthylen mit Polypropylen sowie Mischpolymere, vorzugsweise solche, zu deren Herstellung Monomergemische mit überwiegendem Anteil an Äthylen verwendet wurden, sowie deren Gemische mit Homopolymeren eingesetzt werden.

Des weiteren können auch Zusatzstoffe, die gewöhnlich zusammen mit Kunststoffen auf Polyolefinbasis verwendet werden, wie Lichtschutzmittel, Pigmente, Füllstoffe, flammhemmende Mittel, anstatische Mittel, Gleitmittel usw. der verschäumbaren und zu vernetzenden Formmasse vor der Verarbeitung zugegeben werden.

Hierbei ist jedoch auf die Verträglichkeit mit der erfindungsgemäßen Formmasse bezüglich der erzielbaren Feinzelligkeit zu achten, z.B. wird durch den Zusatz von Antioxydantien die Feinzelligkeit wieder verringert.

Die erfindungsgemäße Formmasse wird nachfolgend näher beschrieben. Bevorzugt werden teilkristalline Äthylen-Propylen-Terpolymere mit hoher Festigkeit, die auch als High Green Strength-Kautschuke bekannt sind, eingesetzt, die eine Reißfestigkeit über 8 N/mm$^2$ bis zu 20 N/mm$^2$ und mehr aufweisen. Die ausgewählten Äthylen-Propylen-Terpolymere sollen darüber hinaus eine sehr gute Verarbeitbarkeit aufweisen, deshalb werden Äthylen-Propylen-Terpolymere mit einer Mooney-Viskosität ML 1+4/100 größer 50 ausgewählt. Besonders geeignet sind Äthylen-Ppropylen-Terpolymere mit 65 bis 80 Gew.-% Äthylen, 4 bis 10 Gew.-% Terkomponente und 10 bis 31 Gew.-% Propylen. Als besonders geeignet haben sich Äthylen-Propylen-Terpolymere mit einer Terkomponente aus Äthylidennorbornen oder 1,4-Hexadien erwiesen. Die gewünschte erfindungsgemäße Feinzelligkeit des vernetzten Schaumstoffes wird durch den Zusatz von Mindestmengen des ausgewählten teilkristallinen Äthylen-Propylen-Terpolymérs erreicht, wobei mindestens 25 Gew.-Teile erforderlich sind bezogpn auf 100 Gew.-Teile Polyolefin. Bevorzugt werden 25 bis 60 Gew.-Teile Äthylen-Propylen-Terpolymere auf 100 Gew.-Teile Polyolefin eingesetzt. Dies ist insbesondere insoweit von Bedeutung, als beispielsweise Polyäthylen ein preiswerterer Kunststoff gegenüber einem Äthylen-Propylen-Terpolymer ist und die erfindungsgemäß herstellbaren vernetzten Polyolefinschaumstoffe mit geringerem Anteil an Äthylen-Propylen-Terpolymer wirtschaftlich sind.

Ein bevorzugtes Verfahren zum Herstellen von vernetzten Schaumstoffen ist gem. der Erfindung mit sehr feiner gleichförmiger überwiegend geschlossener Zellstruktur auf Basis eines Gemisches von Polyolefinen und Äthylen-Propylen-Kautschuk eines Schäummittels und ggf. eines Vernetzungsmittels wird in der Weise durchgeführt, daß zunächst aus dem Polyolefin und 25 bis 150 Gew.-%, bezogen auf das Gewicht des Polyolefins eines teilkristallinen Äthylen-Propylen-Terpolymers, das eine Reißfestigkeit größer 5,0 N/mm$^2$, eine Mooney Viskosität (ML 1+4/100) größer 50 und einer Schmelzwärme $\Delta H_s$ größer 10 J/g und

0072444

60 bis 80 Gew.-% Äthylen,
10 bis 38 Gew.-% Propylen,
2 bis 10 Gew.-% Terkomponente aus Äthylidennorbornen oder 1,4 Hexadien aufweist, sowie einem geeigneten Schäummittel und ggf. geeignetem Vernetzungsmittels, unterhalb der Zersetzungstemperaturen von Vernetzungs- und Schäummittel hergestellt wird, wobei das Schäummittelel eine über der Zersetzungstemperatur des Vernetzungsmittels liegende Zersetzungstemperatur aufweist, und daß die Mischung dann geformt, ggf. mit energiereichen Strahlen einer Dosis von 1 bis 20 Mrad behandelt und/oder zur Vernetzung und zur Verschäumung mittels Heißluft, Strahlen und/oder Flüssigkeitsbad auf Temperaturen zwischen 200 bis 240°C erhitzt wird.

Ein besonderer Vorteil des erfindungsgemäßen Verfahrens ist darin zu sehen, daß ohne Anwendung von äußerem Druck oder Formen kontinuierlich Schaumstoffbahnen auf Basis von Polyolefinen und Äthylen-Propylen-Kautschuk mit sehr fein Zellen in homogener Qualität und glatter Oberfläche hergestellt werden können.

Eine weitere Verbesserung des erfindungsgemäßen Verfahrens zum Herstellen sehr feinzelliger homogener Schaumstoffe auf Basis von Polyolefinen und Äthylen-Propylen-Terpolymeren ergibt sich überraschenderweise dadurch, daß die geformte Mischung vor dem Vernetzen und Ausschäumen einer Temperaturbehandlung unterworfen wird. Diese Temperaturbehandlung kann entweder kurzfristig sein, sie wird dann bevorzugt bei einer unterhalh der Zersetzungstemperatur des Vernetzungsmittels insbesondere bei einer Temperatur zwischen etwa 90 und 110°C während 2 bis 90 Minuten durchgeführt oder aber bei Raumtemperatur, d.h. etwa 15 bis 20°C während einer Zeit von wenigstens 1 Tag. Die letztere Verfahrensweise bedeutet beispielsweise, daß die geformte Mischung gelagert werden kann, ehe sie nachfolgend der Vernetzung und Verschäumung unterworfen wird. Die Erklärung für die weitere Verbesserung des herstellbaren Schaumes in Bezug auf seine Feinzelligkeit und Homogenität könnte darin gesehen werden, daß eine sehr geringe Vernetzung durch während der Formung der homogenen Mischung freigesetzte Radikale erfolgen kann. Diese Verbesserung des herstellbaren Schaumes bezüglich Oberflächengüte und gleichmäßige Feinzelligkeit gemäß den erfindungsgemäß vorgesehenen Verfahrensschritten tritt mit steigendem Äthylen-Propylen-Terpolymer-Anteil auf.

Mit dem erfindungsgemäßen Verfahren sind vernetzte Polyolefinschaumstoffe mit sehr großer Feinzelligkeit und Homogenität, geringen Wanddicken, einer geschlossenen Oberfläche sowie hoher Elastizität und Weichheit im Griff herstellbar. Des weiteren sind die Eigenschaften des mit der erfindungsgemäßen Formmasse und nach den beschriebenen Verfahren herstellbaren Schaumstoffes gegenüber Polyolefinschaumstoffen ohne Zusatz der erfindungsgemäß ausgewählten Äthylen-Propylen-Terpolymere insbesondere in Bezug auf Druckspannung, dynamische Perforation sowie Wärmeisolierung und Bruchdehnung wesentlich verbessert. Die erfindungsgemäß hergestellten Schaumstoffe können vorteilhaft eingesetzt werden für die Herstellung von Formteilen durch Vakuumverformung, da sie eine gute Wärmeverformbarkeit aufweisen sowie für anspruchsvolle Wärmeisolierungen bei erhöhten Temperaturen.

Die erfindungsgemäß herstellbaren vernetzten Schaumstoffe weisen bei guter Temperaturbeständigkeit und sehr hoher Feinzelligkeit eine unerwartet hohe Dehnbarkeit und ausgezeichnete Verarbeitbarkeit für Vakuumverformung im Tiefziehverfahren und ähnliche Verformungsverfahren auf.

Die erfindungsgemäße schäumbare Formmasse erfordert relativ niedrige Mengen an Vernetzungsmittel, beispielsweise Peroxyden, um eine bei der Herstellung des vernetzten Schaumstoffes ausreichende Vernetzung zu erzielen.

Dieser Effekt wird durch den erfindungsgemäßen Zusatz von Äthylen-Propylen-Terpolymer erreicht, da dieser leichter vernetzt als Polyolefine und daher im verglich zu reinen Polyolefinschäumen nur geringe Mengen an Vernetzungsmittel zusätzlich in der Gesamtmischung benötigt werden.

Ein vernetzter Schaumstoff ist in der Regel nicht zu 100 % vernetzt, sondern zwischen 40 und 80 %. Der Vernetzungsgrad wird hierbei beispielsweise bei zwölfstündiger Extraktion des vernetzten Schaumstoffes bei 135°C mit Tetrahydronaphthalin als Lösungsextraktionsmittel im Gelgehalt gemessen. Der Gelgehalt sollte dann bei den erfindungsgemäß hergestellten Schaumstoffen zwischen 40 und 80 Gew.-% liegen.

Die erfindungsgemäße schäumbare Formmasse ist durch die vorgesehene Auswahl von Materialien besonders gut verarbeitbar, d.h. extrudierbar, wodurch eine homogene Mischung und Formgebung der schäumfähigen Formmasse zur Bahnfolie oder zum Profil hergestellt werden kann.

Die Erfindung wird in den nachfolgenden Beispielen näher beschrieben.

Für die Prüfung von Eigenschaften wurden folgende Meßmethoden angewendet:

MFI (190/2) nach DIN 53 735
Mooney-Viskosität (ML 1+4/100) nach DIN 53 523
Schmelzwärme $\Delta H_S$ im Differentialabtastcalorimeter DSC in J/g
Reißfestigkeit N/mm$^2$ nach DIN 53 455
Bruchdehnung in % nach DIN 53 455

Herstellung der Proben:

Die abgewogenen Rezepturbestandteile wurden auf einem Walzwerk bei 110°C Walzentemperatur zu einem Walzfell homogenisiert und anschließend noch 5 min. gewalzt.

Das erhaltene Walzfell wird in der Presse bei 130°C, 50 bar und einer Stehzeit von 8 min. geglättet. Aus dieser Platte werden proben von 8 cm Ø ausgestanzt und diese dann in einem Trockenschrank bei einer Temperatur von 210°C zu Schaumkörpern ausgeschäumt. Die ungeschäumten Platten hatten eine Dicke von 4

4

mm.

Die Herstellung der Proben kann auch durch Mischen der Rezeptur auf kontinuierlichen Compoundieranlagen erfolgen, wobei das dann erhaltene Granulat nachfolgend auf einem Breitschlitzextruder zu einer Matrix extrudiert wird, die dann in einem beispielsweise heizbaren Kanal zu einer endlosen Schaumstoffbahn unter Vernetzung ausgeschäumt wird.

## Beispiele 1 bis 10

Aus Hochdruckpolyäthylen mit einem Schmelzindex MFI (190/2) von 3 g je 10 Minuten und einer Dichte von 0,92 g/cm und einem Äthylen-Propylen-Terpolymer enthaltend 70 Gew.-% Äthylen, 25 Gew.-% Propylen, 5 Gew.-% 1,4-Hexadien, einer Reißfestigkeit von 22 N/mm$^2$, einer Mooney-Viskosität ML1+4/100 von 87 und einer Schmelzwärme $\Delta H_S$ von 25, Dicumylperoxyd 40%ig als Vernetzungsmittel und Azodicarbonamid als Schäummittel wurden gemäß den in der Tabelle 1 aufgeführten Beispielen 1 bis 10 angegebenen Gew.-Teilen Formmassen und daraus Proben in der Presse wie vorangehen beschrieben, hergestellt und zu Schaumstoffkörpern ausgeschäumt. In der beigefügten Tabelle 1 sind die erhaltenen Rohdichten der Schaumstoffkörper, ihre Oberflächengüte und die Feinzelligkeit erläutert.

Die Beispiele 1, 2 und 12 sind hierbei die Vergleichsbeispiele.

## Beispiele 11 und 12

Aus den gleichen Rezepturbestandteilen wie in Beispielen 1 bis 10 wurden proben im kontinuierlichen Verfahren hergestellt. Die Ergebnisse sind ebenfalls in Tabelle 1 dargestellt.

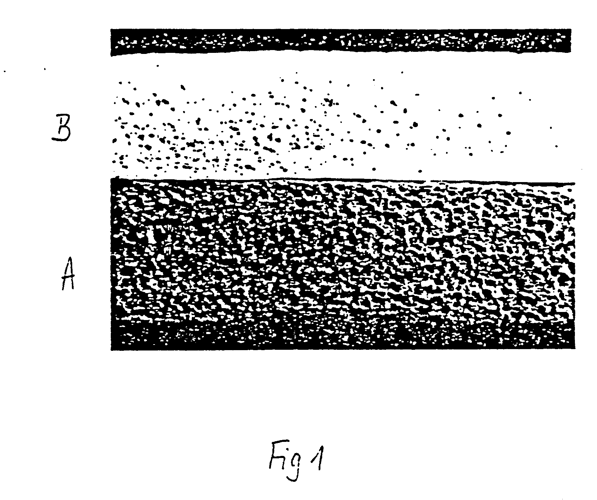

In der beigefügten Fig. 1 sind fotografisch Querschnitte durch die hergestellten Proben dargestellt, aus denen die Zellgröße hervorgeht. Die Vergrößerung beträgt 2,5 : 1. Mit A ist die Probe gem. Beispiel 1 bezeichnet, ein normaler Polyäthylenschaumstoff mit Rohdichte von 30 kg/m$^3$ ohne EPDM und gem. B der erfindungsgemäß hergestellte Schaumstoff aus einer Formmasse mit Zusatz von 30 Gew.-Teilen EPDM, Raumgewicht 38 kg/m$^3$ nach Beispiel 3. Dieser Schaumstoff ist sehr feinzellig und weist eine glatte Oberfläche auf.

In der beigefügten Tabelle 2 sind die Beispiele 13 bis 22 aufgeführt, die ausgehend von einer gleichen Mischung von Hochdruckpolyäthylen und EPDM mit Vernetzungsmittel lediglich die Schäummittelmengen variieren, wodurch Schaumstoffkörper verschiedener Hohdichten hergestellt werden. In allen Fällen zeigt sich, daß die gewünschte Feinzelligkeit herstellbar ist bei glatter Oberfläche. Die eingesetzten Rohstoffe entsprechen in ihrer Qualifikation den in Beispielen 1 bis 10 beschriebenen Rohstoffen.

In der Tabelle 3 sind die Eigenschaften eines vernetzten Polyäthylenschaumstoffes ohne EPDM-Zusatz mit einer Rohdichte von 130 kg/m$^3$ des Vergleichsbeispiels 12 mit einem erfindungsgemäßen Schaumstoffkörper enthaltend 30 Gew.-Tle. EPDM auf 100 Gew.-Teile Polyäthylen bei gleicher Rohdichte gemäß Beispiel 11, zusammengestellt. Hieraus geht hervor, daß bei vergleichbaren Schaumstoffen, nämlich gleicher Rohdichte, die erfindungsgemäßen Schaumstoffe wesentlich bessere Eigenzchaften bezüglich der Festigkeit und Dehnbarkeit und Elastizität aufweisen. Die erfindungsgemäßen Schaumstoffe eignen sich daher vorzüglich für die Herstellung von Formteilen beispielsweise durch Vakuumverformen, Tiefziehverformen usw. Darüber hinaus haben sie verbesserte Isoliereigenschaften.

## Beispiele 23 bis 26

Aus 100 Gew.-Teilen Hochdruckpolyäthylen mit einem Schmelzindex MFI (190/2) von 3 g je 10 Min. und einer Dichte von 0,92 g/cm$^3$, 2,3 Gew.-Teilen 40 %igem Dicuomylperoxyd, 19 Gew.-Teilen Azodicarbonamid sowie Mengen von 20 bzw. 40 bzw. 60 bzw. 80 Gew.-Teilen eines Äthylen-Propylen-Terpolymers enthaltend 67 Gew.-% Äthylen, 27 Gew.-% Propylen und 6 Gew.-% Äthylennorbornen mit einer Mooney-Viskosität ML 1+4/100 von 85 und einer Schmelzwärme $\Delta H_s$ von 14 J/g und einer Reißfestigkeit von 11,2 N/mm$^2$ wurden Schumstoffkörper hergestellt. Erst die Proben mit 40 und mehr Gew.-Teilen EPDM zeigten sehr gute Feinzelligkeit und eine glatte Oberfläche. Die Rohdichten der Schaumstoffkörper betrugen 31, 35, 41, 45 kg/m$^3$. Das Beispiel 23 mit 20 Gew.-Teilen Äthylen-Terpolymer ist ein Vergleichsbeispiel.

## Vergleichs-Beispiele 27 bis 30:

Aus 100 Gew.-Teilen Hochdruckpolyäthylen MFI 190/2 von 3 g je 10 Min., 19 Gew.-Teilen Azodicarbonamid, 2,3 Gew.-Teilen 40 %igem Dicumylperoxyd wurden Mischungen hergestellt mit Zusatz von 20 bzw. 40, 60, 80 Gew.-Teilen eines Äthylen-Propylen-Kautschukes mit 70 bis 76 % Äthylen und 24 bis 30 % Propylen, einer Mooney-Viskosität ML 1+4/100 von 85 und einer Schmelzwärme $\triangle H_s$ von 21 J/g und einer Reißfestigkeit von 5,8 N/mm². Hieraus wurden Schaumstoffkörper hergestellt, die jedoch eine rauhe Oberfläche aufwiesen und nicht feinzellig waren, sondern in der Qualität den nach Fig. 1 Abbildung A dargestellten entsprachen. Die eingesetzten Äthylen-Propylen-Kautschuke entsprachen nicht der erfindungsgemäß vorgesehenen Qualifikation.

**Beispiele 31 und 32**

Aus 100 Gew.-Teilen Hochdruckpolyäthylen MFI 190/2 von 3 g je 10 min, 19 Gew.-Teilen Azodicarbonamid und 2,3 Gew.-Teilen 40 %igem Dicumylperoxyd wurden zusammen mit 40 bzw. 80 Gew.-Teilen eines Äthylen-Propylen-Kautschukes enthaltend 54 Gew.-% Äthylen, 42 Gew.-% Propylen, 4 Gew.-% Äthylidennorbornen, mit einer Mooney-Viskosität ML 1+4/100 von etwa 94, einer Schmelzwärme $\triangle H_s$ von 0 (amorpher Zustand), einer Reißfestigkeit von 0,162, Proben hergestellt, die jedoch ebenfalls nicht feinzellig wurden, sondern grobzellig mit rauher Oberfläche. Die erzielten Rohdichten lagen hei 38, 45 und 50 kg/m².

Wie bereits vorangehend ausgeführt, ist die erzielbare Zellgröße, und damit Zellstruktur des Schaumstoffes sowohl abhängig von der Rezeptur, d.h. den Rezepturbestandteilen, als auch von der zu schäumenden Schaumkörpergröße. Die erzielbare Zellgröße ist immer abhängig von der Raumdichte des herzustellenden Schaumstoffes und von der Dicke der geformten noch nicht aufgeschäumten Mischung. Hierbei ist es so, daß mit steigender Raumdichte bei sonst konstanten Parametern die Zellen immer kleiner werden. Hingegen werden bei größer werdender Dicke der noch nicht geschäumten geformten Mischung die Zellen immer größer bei sonst gleichen Parametern.

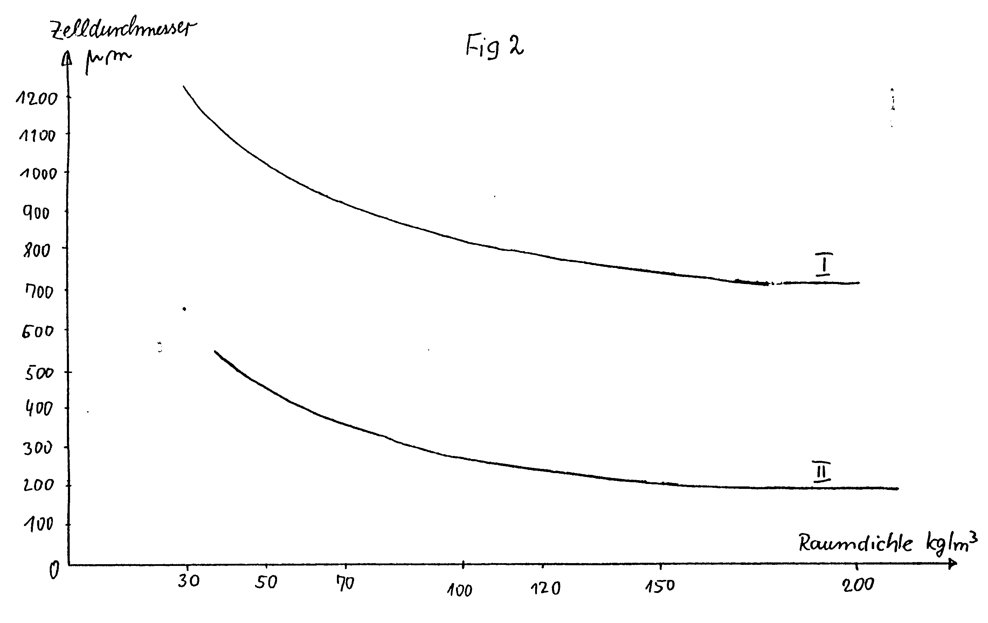

In der beigefügten Fig. 2 ist die Abhängigkeit der erzielbaren mittleren Zelldurchmesser von der Raumdichte eines Polyolefinschaumes ohne (Kurve I) und mit erfindungsgemäße Zusatz von 40 Gew. Äthylen-Propylen-Terpolymer (Kurve II) wie in den Beispielen 1 bis 10 beschrieben, dargestellt bei einer Dicke der geformten noch nicht ausgeschäumten Platte von 4 mm.

**Tabelle 1**

| Beispiel Nr. | 1 | 2 | 3 | 4 | 5 | 6 | 7 | 8 | 9 | 10 | 11 | 12 |
|---|---|---|---|---|---|---|---|---|---|---|---|---|
| Gew.-Teile | | | | | | | | | | | | |
| ILP-Polyäthylen | 82 | 82 | 82 | 82 | 82 | 82 | 100 | 100 | 100 | 100 | 100 | 100 |
| 40 % Dicumylperoxid | 2 | 2 | 2 | 2 | 2 | 2 | 2,8 | 2,8 | 2,8 | 2,8 | 2,4 | 2,8 |
| Azodicarbonamid | 16 | 16 | 16 | 16 | 16 | 16 | 4,2 | 4,2 | 4,2 | 4,2 | 6 | 4,2 |
| EPDM | - | 20 | 30 | 40 | 60 | 100 | 20 | 30 | 60 | 100 | 30 | - |
| Rohdichte kg/m³ | 30 | 34 | 38 | 42 | 48 | 60 | 165 | 180 | 253 | 365 | 130 | 130 |
| Feinzelligkeit | nein | etwas | ja | ja | ja | ja | nein | ja | ja | ja | ja | nein |
| Oberfläche | rauh | glatt | glatt | glatt | glatt | glatt | glatt | glatt | glatt | glatt | glatt | rauh |
| mittlere Poren-größe (µm) | 1200 | 700 | 500 | 450 | 400 | 400 | 800 | 400 | 200 | 200 | 500 | 900 |

**Tabelle 2**

| Beispiel Nr. | 13 | 14 | 15 | 16 | 17 | 18 | 19 | 20 | 21 | 22 |
|---|---|---|---|---|---|---|---|---|---|---|
| Gew.-Teile | | | | | | | | | | |
| LDP-Polyäthylen | 100 | 100 | 100 | 100 | 100 | 100 | 100 | 100 | 100 | 100 |
| 40 % Dicumylperoxid | 2,4 | 2,4 | 2,4 | 2,4 | 2,4 | 2,4 | 2,4 | 2,4 | 2,4 | 2,4 |
| Azodicarbonamid | 18,3 | 15 | 12,9 | 11,5 | 8,0 | 6,5 | 4,8 | 4,2 | 3,4 | 2,4 |
| EPDM | 40 | 40 | 40 | 40 | 40 | 40 | 40 | 40 | 40 | 40 |
| Rohdichte $kg/m^3$ | 40 | 46 | 51 | 61 | 88 | 115 | 158 | 163 | 210 | 322 |
| Feinzelligkeit | ja | ja | ja | ja | ja | ja | ja | ja | ja | ja |
| Oberfläche | glatt | glatt | glatt | glatt | glatt | glatt | glatt | glatt | glatt | glatt |
| mittlere Porengröße ($\mu$m) | 500 | 450 | 450 | 400 | 300 | 250 | 200 | 200 | 180 | 180 |

**Tabelle 3**

| Eigenschaften | Vergleichs, beispiel 12 | Beispiel 11 |
|---|---|---|
| Schaumstoff-Plattendicke mm | $\sim$ 3,6 | $\sim$ 3,6 |
| Rohdichte $kg/m^3$ | 130 | 130 |
| Zugfestigkeit $N/mm^2$ | | |
| längs | 1,3 | 1,5 |
| quer | 1,0 | 1,2 |
| (DIN 53 571) | | |
| Bruchdehnung % | | |
| längs | 110 | 226 |
| quer | 118 | 172 |
| (DIN 53571) | | |

**Tabelle 3**

| Eigenschaften | Vergleichs, beispiel 12 | Beispiel 11 |
|---|---|---|
| Druckspannung bei 25 % Stauchung (DIN 53577) N/mm$^2$ | 0,3 | 22 |
| Dynam. Perforationstest Gew. 1 kg, ⌀ 10 mm, Fallhöhe in mm bei Durchstoß 23°C: | 125 | 225 |
| Wärmeleitfähigkeit W/mK bei 23°C | 0,039 | 0,033 |

**Patentansprüche**

1. Verschäumbare Formmasse zum Herstellen eines vernetzten Schaumstoffes aus einem Gemisch eines Polyolefins eines Äthylen-Propylen-Kautschuks, eines Schäummittels und ggf. eines Vernetzungsmittels, durch druckloses Verschäumen und Vernetzen, dadurch gekennzeichnet, daß sie je 100 Gew.-Teile Polyolefin enthält.

25 bis 150 Gew.-Teile eines teilkristallinen Äthylen-Propylen-Terpolymers einer Reißfestigkeit größer 5,0 N/mm$^2$, einer Mooney-Viskosität (ML 1+4/100) größer 50, mit einer Schmelzwärme (nach DSC) von mindestens $\triangle H_S$ 10 J/g mit Gehalten von

60 bis 80 Gew.-% Äthylen,

2 bis 10 Gew.-% Terkomponente aus Äthylidennorbornen oder 1,4 Hexadien

10 bis 38 Gew.-% Propylen

2. Formmasse nach Anspruch 1, dadurch gekennzeichnet, daß sas Äthylen-Propylen-Terpolymer

65 bis 80 Gew.-% Äthylen,

4 bis 10 Gew.-% Terkomponente,

10 bis 31 Gew.-% Propylen

enthalt und eine Reißfestigkeit über 8 N/mm$^2$ aufweist.

3. Formmasse nach einem der Ansprüche 1 oder 2, dadurch gekennzeichnet, daß das Gemisch 25 bis 60 Gew.-Teilen Äthylen-Propylen-Terpolymer je 100 Gew.-Teileñ Polyolefin enthält.

4. Formmasse nach Anspruch 1, dadurch gekennzeichnet, daß als Polyolefin ein Polyäthylen mit einem Schmelzindex (MFI 190/2) von 1 bis 8 und einer Dichte von 0,91 bis 0,96 g/cm$^3$ vorgesehen ist.

5. Formmasse nach einem der Ansprüche 1 bis 4, dadurch gekennzeichnet, daß das Gemisch je 100 Gew.-Teile Polyolefin und 25 bis 150 Gew.-Teile Äthylen-Propylen-Terpolymer 0,6 bis 1,6 Gew.-Teile eines peroxidischen Vernetzungsmittels enthält.

6. Formmasse nach Anspruch 5, dadurch gekennzeichnet, daß als Peroxid Dicumylperoxid vorgesehen ist.

7. Formmasse nach einem der Ansprüche 1 bis 6, dadurch gekennzeichnet, daß ein Schäummittel mit höherer Zersetzungstemperatur als das Vernetzungsmittel, insbesondere Azodicarbonamid, Dinitrosopentamethylentetramin, p, p'Oxy-bis-benzol-sulfonylhydrazid, Toluolsulfonylhydrazid vorgesehen ist.

8. Verfahren zum Herstellen von vernetzten Schaumstoffen mit sehr feiner, gleichförmiger, überwiegend

8

geschlossener Zellstruktur aus einem Gemisch eines Polyolefins, eines Äthylen-Propylen-Kautschuks, eines Schäummittels und ggf. eines Vernetzungsmittels, dadurch gekennzeichnet, daß zunächst eine homogene Mischung aus 100 Gew.-Teilen Polyolefin und 25 bis 150 Gew.-Teilen teilkristallinem Äthylen-Propylen-Terpolymer, das eine Reißfestigkeit größer 5,0 N/mm², eine Mooney-Viskosität (ML 1+4/100) größer 50 und einer Schmelzwärme $\triangle H_S$ (nach DSC) größer 10 J/g sowie Gehalten von

60 bis 80 Gew.-% Äthylen,

10 bis 38 Gew.-% Propylen,

2 bis 10 Gew.-% Terkomponente aus Äthylidennorbornen

oder 1,4 Hexadien aufweist sowie

einem geeigneten Schäummittel und ggf. geeigneten Vernetzungsmittel, unterhalb der Zersetzungstemperaturen von Vernetzungs- und Schäummittel hergestellt wird, wobei das Schäummittel eine über der Zersetzungstemperatur des Vernetzungsmittels liegende Zersetzungstemperatur aufweist, und daß die Mischung dann geformt, ggf. mit energiereichen Strahlen einer Dosis von 1 bis 20 Mrad behandelt und/oder zur Vernetzung und zur Verschäumung mittels Heißluft, Strahlen und/oder Flüssigkeitsbad auf Temperaturen zwischen 200 bis 240° C erhitzt wird.

9. Verfahren nach Anspruch 8, dadurch gekennzeichnet, daß ein Äthylen-Propylen-Terpolymer mit einer Reißfestigkeit von mindestens 8 N/mm² enthaltend

65 bis 80 Gew.-% Äthylen,

10 bis 31 Gew.-% Propylen,

4 bis 10 Gew.-% Terkomponente

vervendet wird.

10. Verfahren nach Anspruch 9, dadurch gekennzeichnet, daß als Polyolefin ein Polyäthylen mit einem Schmelzindex ((MFI 190/2) von 1 bis 8 und einer Dichte von 0,91 bis 0,96 g/cm³ verwendet wird.

11. Verfahren nach einem der Ansprüche 8 bis 10, dadurch gekennzeichnet, daß zur chemischen Vernetzung ein Peroxid, insbesondere Dicumylperoxid in einer Menge von 0,6 bis 1,6 Gew.-Teilen, bezogen auf 100 Gew.-Teile Polyolefin und 25 bis 150 Gew.-Teile Äthylen-Propylen-Terpolymer, zugesetzt wird.

12. Verfahren nach Anspruch 11, dadurch gekennzeichnet, daß die geformte Mischung vor dem Vernetzen und Ausschäumen bei einer Temperatur unterhalb der Zersetzungstemperatur des Vernetzungsmittels, insbesondere bei einer Temperatur zwischen etwa 90 und 110° C, während 2 bis 90 min getempert wird.

13. Verfahren nach Anspruch 11, dadurch gekennzeichnet, daß die geformte Mischung vor dem Vernetzen und Ausschäumen bei etwa 15 bis 20° C während einer Zeit von wenigstens 1 Tag getempert wird.

**Revendications**

1. Matière à mouler expansible pour la fabrication d'une mousse réticulée, constituée d'un mélange d'une polyoléfine, un caoutchouc éthylène/propylène, un porogène et éventuellement pression et réticulation, caractérisée par le fait qu'elle contient, pour 100 parties en poids de polyoléfine, 25 à 150 parties en poids d'un terpolymère éthylène/propylène en partie cristallin, ayant une résistance à la déchirure supérieure à 5,0 N/mm², une consistance Mooney (ML 1+4/100) superieure à 50, une chaleur de fusion (selon AED) d au moins $\triangle H_S$ 10 J/g, comportant des teneurs de

60 à 80% en poids en éthylène,

2 à 10% en poids en un troisième composant constitué d'éthylidène-norbornène ou de 1,4-hexadiène, 10 à 38% en poids en propylène.

2. Matière à mouler selon la revendication 1, caractérisée par le fait que le terpolymère éthylène/propylène contient

65 à 80% en poids d'éthylène,

4 à 10% en poids de troisième composant,

10 à 31 % en poids de propylène,

et présente une résistance à la déchirure supérieure à 8 N/mm².

3. Matière à mouler selon l'une des revendications 1 ou 2, caractérisée par le fait que le mélange contient 25 à 60 parties en poids de terpolymère éthylène/propylène pour 100 parties en poids de polyoléfine.

4. Matière à mouler selon la revendication 1, caractérisée par le fait qu'il est prévu en tant que polyoléfine un polyéthylène ayant un indice de fluidité (MFI 190/2) de 1 à 8 et une densité de 0,91 à 0,96 g/cm³.

5. Matière à mouler selon l'une des revendications 1 à 4, caractérisée par le fait que le mélange contient, pour 100 parties en poids de polyoléfine et 25 à 150 parties en poids de terpolymère éthylène/propylène, 0,6 à 1,6 partie en poids d'un agent de réticulation de type peroxyde.

6. Matière à mouler selon la revendication 5, caracterisée par le fait qu'est prévu en tant que peroxyde du peroxyde de dicumyle.

7. Matière à mouler selon l'une des revendications 1 à 6, caractérisée par le fait qu'un porogène à température de décomposition relativement haute est prévu en tant que l'agent de réticulation, en particulier l'azodicarbonamide, la dinitroso-pentaméthylènetétramine, le p,p'-oxy-bis-benzènesulfonylhydrazide, le toluènesulfonylhydrazide,

8. Procédé pour la fabrication de mousses réticulées à très fine structure alvéolaire, régulière, essentiellement fermée, à partir d'un mélange d'une polyoléfine, un caoutchouc éthylène/propylène, un porogène et éventuellement un agent de réticulation, caractérisé par le fait que l'on prépare d'abord un mélange homogène composé de 100 parties en poids de polyoléfine et 25 à 150 parties en poids d'un terpolymère éthylène/propylène en partie cristallin, qui présente une résistance à la déchirure supérieure à 5,0 N/mm$^2$, une consistance Mooney (ML 1+4/100) supérieure à 50 et une chaleur de fusion $\Delta H_S$ (selon AED) supérieure à 10 J/g, ainsi que des teneurs de

60 à 80% en poids en éthylène,

10 à 38% en poids en propylène,

2 à 10% en poids en un troisième composant constitué d'éthylidène-norbornène ou de 1,4-hexadiène,

ainsi que d'un porogène approprié et éventuellement un agent de réticulation approprié, au-dessous des températures de décomposition du porogène et de l'agent de réticulation, le porogèene présentant une température de décomposition supérieure à la température de décomposition de l'agent de réticulation, et que le mélange est ensuite moulé, eventuellement traité avec un rayonnement a haute énergie, à une dose de 1 à 20 Mrads, et/ou chauffé, pour la réticulation et pour l'expansion, à des températures comprises entre 200 et 240°C, au moyen d'air chaud, de rayons et/ou d'un bain de liquide.

9. Procédé selon la revendication 8, caractérisé par le fait que l'on utilise un terpolymère éthylène/propylène ayant une résistance à la déchirure d'au moins 8 N/mm$^2$, contenant

65 à 80% en poids d'éthylène,

10 à 31% en poids de propylène,

4 à 10% en poids d'un troisième composant.

10. Procédé selon la revendication 9, caractérisé par le fait que l'on utilise en tant que polyoléfine un polyéthylène ayant un indice de fluidité (MFI 190/2) de 1 à 8 et une densité de 0,91 à 0,96 g/cm$^3$.

11. Procédé selon l'une des revendications 8 à 10, caractérisé par le fait que, pour la réticulation chimique, on ajoute un peroxyde, en particulier du peroxyde de dicumyle, en une quantité allant de 0,6 à 1,6 partie en poids, par rapport à 100 parties en poids de polyoléfine et 25 à 150 parties de terpolymère éthylène/propylène.

12. Procédé selon la revendication 12, caractérisé par le fait que le mélange moulé est étuvé, avant la réticulation et l'expansion, pendant 2 à 90 minutes, à une température inférieure à la température de décomposition de l'agent de réticulation, en particulier à une température comprise entre environ 90 et 110˙ C.

13. Procédé selon la revendication 11, caractérisé par le fait que le mélange moulé est étuvé, avant la réticulation et l'expansion, pendant une durée d'au moins un jour, aux environs de 15 à 20°C.

## Claims

1. Foamable moulding composition for the production of a cross-linked foam material from a mixture of a polyolefin, an ethylene-propylene rubber, a foaming agent and, optionally, a cross-linking agent, by foaming in the absence of applied pressure, characterised in that it contains, per 100 parts by weight of polyolefin,

25 to 150 parts by weight of a partially crystalline ethylene-propylene terpolymer having a tear resistance greater than 5.0 N/mm$^2$, a Mooney viscosity (ML 1+4/100) greater than 50, with a melting heat (according to DSC) of at least $\Delta H_S$ 10 J/g with contents of

60 to 80 % by weight ethylene

2 to 10% by weight tercomponent of ethylidenenorbornene or 1,4-hexadiene

10 to 38% by weight propylene.

2. Moulding composition according to claim 1, characterised in that the ethylene-propylene terpolymer contains

65 to 80% by weight ethylene

4 to 10% by weight of tercomponent

10 to 31% by weight of propylene

and has a tear resistance above 8 N/mm$^2$.

3. Moulding composition according to one of claims 1 or 2, characterised in that the mixture contains 25 to 60 parts by weight of ethylene-propylene terpolymer per 100 parts by weight of polyolefin.

4. Moulding composition according to claim 1, characterised in that a polyethylene with a melt index (MFI 190/2) of 1 to 8 and a density of 0.91 to 0.96 g/cm$^3$ is provided as polyolefin.

5. Moulding composition according to one of claims 1 to 4, characterised in that the mixture contains, per 100 parts by weight of polyolefin and 25 to 150 parts by weight of ethylene-propylene terpolymer, 0.6 to 1.6 parts by weight of a peroxidic cross-linking agent.

6. Moulding composition according to claim 5, characterised in that dicumyl peroxide is provided as peroxide.

7. Moulding composition according to one of claims 1 to 6, characterised in that there is provided a foaming agent with higher decomposition temperature than the cross-linking agent, in particular azodicarbonamide, dinitroso-pentamethylenetetramine, p,p'-oxy-bis-benzenesulphonylhydrazide, tolulenesulphonylhydrazide.

8. Process for the production of cross-linked foam materials with very fine uniform predominantly closed cell structure from a mixture of a polyolefin, an ethylene-propylene rubber, a foaming agent and, optionally, a cross-linking agent, characterised in that firstly a homogeneous mixture of 100 parts by weight of polyolefin and 25 to 150 parts by weight of partially crystalline ethylene-propylene terpolymer which has a tear resistance greater than 5.0 N/mm², a Mooney viscosity (ML 1+4/100) greater than 50 and a melting heat $\Delta H_S$ (according to DSC) greater than 10 J/g as well as contents of

60 to 80% by weight ethylene,

10 to 38% by weight propylene,

2 to 10% by weight of tercomponent of ethylidenenorbornene or 1,4-hexadiene,

as well as a suitable foaming agent and optionally suitable cross-linking agent, is produced below the decomposition temperature of the cross-linking and foaming agents, with the foaming agent having a decomposition temperature lying above the decomposition temperature of the cross-linking agent, and that the mixture is then shaped, optionally treated with energy-rich irradiation in a dose of 1 to 20 Mrad and/or is heated for cross-linking and for foaming to temperatures between 200 to 240°C by means of heated air, irradiation and/or a liquid bath.

9. Process according to claim 8, characterised in that there is used an ethylene-propylene terpolymer with a tear resistance of at least 8 N/mm² containing

65 to 80% by weight of ethylene,

10 to 31% by weight of propylene,

4 to 10% by weight of tercomponent.

10. Process according to claim 9, characterised in that a polyethylene with a melt index (MFI 190/2) of 1 to 8 and a density of 0.91 to 0.96 g/cm³ is used as polyolefin.

11. Process according to one of claims 8 to 10, characterised in that a peroxide, in particular dicumyl peroxide, is added in an amount of 0.6 to 1.6 parts by weight referred to 100 parts by weight of polyolefin and 25 to 150 parts by weight of ethylene-propylene terpolymer, for chemical cross-linking.

12. Process according to claim 11, characterised in that the shaped mixture is tempered before the cross-linking and foaming at a temperature below the decomposition temperature of the cross-linking agent, in particular at a temperature between about 90 and 110°C, over 2 to 90 minutes.

13. Process according to claim 11, characterised in that the shaped mixture is tempered before the cross-linking and foaming at about 15 to 20°C for a period of at least one day.

Fig 1

Fig 2